# EUROPÄISCHE PATENTANMELDUNG

(11) **EP 3 305 677 A1**
(43) Veröffentlichungstag der Anmeldung: **11.04.2018**
(21) Anmeldenummer: 17195235.1
(22) Anmeldetag: 06.10.2017
(51) Int. Cl.: B65D 21/04, B65D 83/00

(54) **MEHRWEG-BEHÄLTER ZUM LAGERN UND TRANSPORTIEREN VON LEBENSMITTELN**

(30) Priorität: 07.10.2016 DE 202016105636 U
(71) Anmelder: Durmus, Alpay, 32051 Herford (DE); Single, Hendrik, 32049 Herford (DE)
(72) Erfinder: Durmus, Alpay, 32051 Herford (DE); Single, Hendrik, 32049 Herford (DE)
(74) Vertreter: Kleine, Hubertus

(57) **Zusammenfassung**

Die Erfindung betrifft einen Mehrweg-Behälter (1) zum Lagern und Transportieren von Lebensmitteln, der einen Boden (2) zum Stützen der Lebensmittel, vorzugsweise Pizzen (9), und eine periphere Wandung (3), die vom Boden (2) wegragt, aufweist. Der Mehrweg-Behälter (1) zeichnet sich dadurch aus, dass an der Wandung (3) mindestens zwei Vorsprünge (4), vorzugsweise in Form von Verformungen, ausgebildet sind.

## Beschreibung

Die Erfindung betrifft einen Mehrweg-Behälter zum Lagern und Transportieren von Lebensmitteln, vorzugsweise Pizzen. Der Mehrweg-Behälter weist einen Boden zum Stützen der Lebensmittel und eine periphere Wandung, die vom Boden wegragt, auf.

Die Druckschrift US 5 190 213 A beschreibt einen Mehrweg-Behälter aus Kunststoff zum Transport von Lebensmitteln. Er umfasst einen Boden, eine Wandung und einen Deckel, wodurch eine geschlossene Kammer für Lebensmittel geschaffen wird. Es ist zudem ein Einlegeboden zwischen den Lebensmitteln und dem Boden des Behälters vorgesehen. Behälter dieser Art können vertikal gestapelt werden, wenn der Deckel geschlossen ist.

Die Druckschrift US 5 662 237 A beschreibt ebenfalls einen Mehrweg-Behälter, vorzugsweise aus Kunststoff, zum Transportieren oder Lagern von Lebensmitteln. Er umfasst einen Boden, eine Wandung und einen Deckel, wodurch ein geschlossener Raum für Lebensmittel geschaffen wird. Es ist zudem ein Einlegeboden zwischen den Lebensmitteln und dem Boden des Behälters vorgesehen. Weiterhin werden Vorsprünge auf dem Deckel und Einbuchtungen auf der Unterseite des Bodens offenbart, wodurch die Behälter beim vertikalen Stapeln gegen Verrutschen gesichert sind. Dieses Stapeln setzt jedoch das Vorhandensein des Deckels voraus. Diese Art von Behältern können auch zum Lagern ineinander versenkt werden, solange der Deckel aufgeklappt oder abgenommen wird. Somit wird durch den Deckel zum Einen bei der Produktion zusätzliches Material und zum Anderen beim Lagern zusätzlicher Platz benötigt.

Es ist daher Aufgabe der vorliegenden Erfindung, einen Mehrweg-Behälter zum Lagern und Transportieren von Lebensmitteln zu schaffen, der sowohl in großen Stückzahlen kompakt gelagert als auch für den Transport sicher gestapelt werden kann. Eine weitere Aufgabe der vorliegenden Erfindung besteht darin, das für den Mehrweg-Behälter benötigte Material zu reduzieren.

Diese Aufgaben werden mit einem Mehrweg-Behälter mit den Merkmalen des Anspruchs 1 gelöst.

Ein erfindungsgemäßer Mehrweg-Behälter weist an seiner Wandung mindestens zwei Vorsprünge auf, die vorzugsweise durch Verformungen gebildet sind. Beispielsweise können die Vorsprünge nach oben schmaler werden, leicht zur Vertikalen geneigt sein und nicht mit Material ausgefüllt sein, wodurch sich auf der anderen Seite der Wandung Aussparungen ergeben. Beim Stapeln eines ersten erfindungsgemäßen Mehrweg-Behälters auf einen zweiten gleich ausgebildeten Mehrweg-Behälter verhindern diese Vorsprünge in einer ersten Drehstellung der beiden Mehrweg-Behälter zueinander, dass die Mehrweg-Behälter sich ineinander versenken. Entsprechend können die Mehrweg-Behälter Lebensmittel, insbesondere Pizzen, aufnehmen und zu deren Transport eingesetzt werden.

Beim Versenken eines ersten erfindungemäßen Mehrweg-Behälters in einen zweiten gleich ausgebildeten Mehrweg-Behälter in einer zweiten, sich von der ersten unterscheidenden Drehstellung werden die Vorsprünge des ersten Mehrweg-Behälters vertikal in eine Linie mit den Vorsprüngen des zweiten Mehrweg-Behälters gebracht. Die erste und die zweite Drehstellung unterscheiden sich durch Drehung eines der Mehrweg-Behälter gegenüber dem anderen in der Ebene des Bodens. So kann sich beim Absenken jeweils ein Vorsprung in die durch den vertikal darunterliegenden Vorsprung gebildete Aussparung einfügen, wodurch der erste Mehrweg-Behälter in den zweiten Mehrweg-Behälter versenkt werden kann und eine platzsparende Lagerung ohne aufgenommene Lebensmittel möglich ist.

Dadurch können mehrere erfindungsgemäße Mehrweg-Behälter, ohne dass Deckel zwingend erforderlich sind, je nach Anordnung zueinander sowohl ineinander versenkbar, als auch vertikal stapelbar sein, wobei vorzugsweise kein Boden seitlich über den Rand des Bodens eines anderen Mehrweg-Behälters hinausragt. Dies reduziert sowohl das für die Produktion benötigte Material als auch den für die Lagerung benötigten Platzbedarf.

Sind mehrere Mehrweg-Behälter vertikal gestapelt, so befindet sich zwischen den Böden zweier direkt übereinander liegender Mehrweg-Behälter ein Raum mit einer ersten Höhe zum Unterbringen von Lebensmitteln. Sind mehrere Mehrweg-Behälter ineinander versenkt, so befindet sich zwischen den Böden zweier direkt übereinanderliegender Mehrweg-Behälter ein Raum mit einer geringeren zweiten Höhe, vorzugsweise mit einer zweiten Höhe von weniger als 70% der ersten Höhe, insbesondere weniger als 40% der ersten Höhe. Um auch ohne einen weiteren Mehrweg-Behälter einen geschlossenen Raum zum Unterbringen von Lebensmitteln zu erhalten, kann der oberste Mehrweg-Behälter mit einem Deckel abgedeckt sein.

Vorzugsweise wird ein Verrutschen mehrerer gestapelter erfindungsgemäßer Mehrweg-Behälter verhindert, indem bei mindestens zwei gleich ausgebildeten gestapelten Mehrweg-Behältern der obere Mehrweg-Behälter zumindest abschnittsweise von der Wandung des unteren Mehrweg-Behälters umgeben ist.

Um den Boden des Mehrweg-Behälters zu stabilisieren, können in diesem Erhöhungen und/oder Vertiefungen, vorzugsweise durch Verformungen, vorgesehen sein.

Um die Handhabung des Mehrweg-Behälters zu erleichtern, kann an der Wandung mindestens ein Griff vorgesehen sein, insbesondere kann dieser Griff als umlaufender oder teilweise umlaufender Rand oder Kragen ausgebildet sein.

Der Mehrweg-Behälter kann aus lebensmittelkonformem Kunststoff, vorzugsweise PP (Polypropylen) oder PE (Polyethylen), insbesondere durch Tiefziehen oder Spritzguss, hergestellt sein.

Es kann zudem eine Anordnung aus einem erfindungsgemäßen Mehrweg-Behälter und einem Einlegboden, vorzugsweise aus Pappe, vorgesehen sein, wobei der Einlegeboden zwischen dem Boden des Mehrweg-Behälters und den Lebensmitteln vorgesehen ist. Dies erleichtert zum einen die Reinigung und zum anderen das Entfernen der Lebensmittel aus dem Mehrweg-Behälter, da die Lebensmittel zusammen mit dem Einlegeboden aus dem Mehrweg-Behälter entnommen werden können. Dies ist insbesondere der Fall, wenn der Einlegeboden zumindest abschnittsweise vom Boden des Mehrweg-Behälters wegragt. Vorzugsweise kann der Einlegeboden mindestens zwei Grifflaschen umfassen und/oder mindestens eine aufgerichtete Begrenzung aufweisen.

Die Erfindung wird nachfolgend anhand zweier Ausführungsbeispiele mit Bezug auf die beigefügten Zeichnungen näher erläutert. Es zeigt:
- Figur 1: eine isometrische Schrägansicht eines erfindungsgemäßen Mehrweg-Behälters zum Lagern und Transportieren von Lebensmitteln;
- Figur 2: eine Draufsicht eines erfindungsgemäßen Mehrweg-Behälters zum Lagern und Transportieren von Lebensmitteln;
- Figur 3: eine schematische Darstellung der in Figur 2 dargestellten Ausführungsform eines Mehrweg-Behälters und einen Schnitt durch diesen;
- Figur 4: eine Seitenansicht zweier vertikal gestapelter erfindungsgemäßen Mehrweg-Behälter zum Lagern und Transportieren von Lebensmitteln;
- Figur 5: eine Seitenansicht zweier ineinander versenkter erfindungsgemäßen Mehrweg-Behälter zum Lagern und Transportieren von Lebensmitteln; und
- Figur 6: eine schematische Darstellung eines Einlegebodens, der in einem erfindungsgemäßen Mehrweg-Behälter verwendet sein kann.

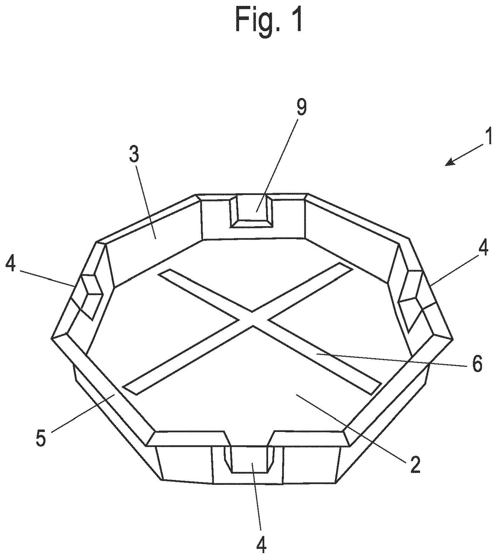

In Figur 1 ist in einer isometrischen Schrägansicht ein hier achteckiger Mehrweg-Behälter 1 zum Lagern und Transportieren von Waren (Lebensmitteln), insbesondere einer Pizza, dargestellt, der einen Boden 2, eine Wandung 3 und Griffe 5 in Form eines an der Wandung 3 teilweise umlaufenden Rands oder Kragens umfasst. Zudem sind an der Wandung 3 vier Vorsprünge 4 durch Verformungen gebildet. Die Vorsprünge 4 weisen nach außen, wodurch auf der Innenseite der Wandung 3 vier Aussparungen 9 gebildet werden. Somit weisen vier Seiten der Wandung 3 keine Vorsprünge 4 auf. Eine ebenfalls durch Verformung erzeugte Erhöhung 6 stabilisiert den Boden 2 des Mehrweg-Behälters 1.

Wird ein zweiter, gleich ausgebildeter Mehrweg-Behälter 1' betrachtet und der erste Mehrweg-Behälter 1 so darüber angeordnet, dass die Vorsprünge 4 des ersten Mehrweg-Behälters 1 über den Seiten des zweiten Mehrweg-Behälters 1' angeordnet sind, die keine Vorsprünge 4 aufweisen, so kann der erste Mehrweg-Behälter 1 auf den zweiten, darunterliegenden Mehrweg-Behälter 1' gestapelt werden. Wird der erste Mehrweg-Behälter 1 so über dem zweiten Mehrweg-Behälter 1' angeordnet, dass sich die Vorsprünge 4 des zweiten Mehrweg-Behälters vertikal in einer Linie mit den Vorsprüngen 4 des zweiten Mehrweg-Behälters 1' befinden, kann der erste Mehrweg-Behälter 1 in den zweiten Mehrweg-Behälter 1' versenkt werden.

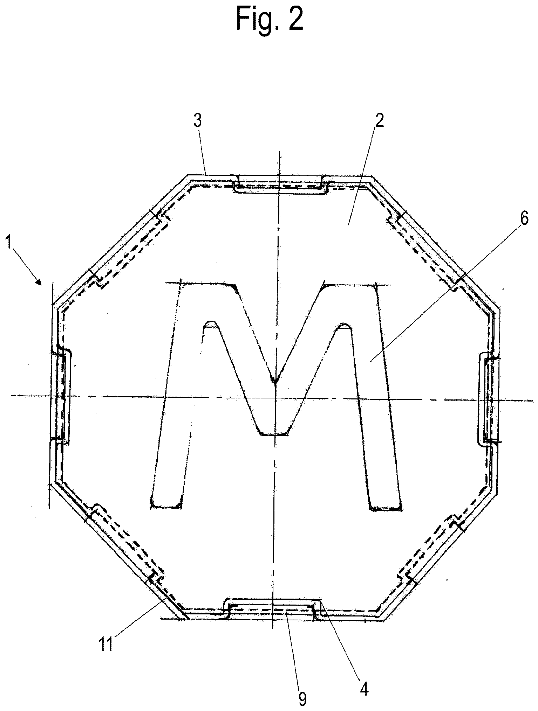

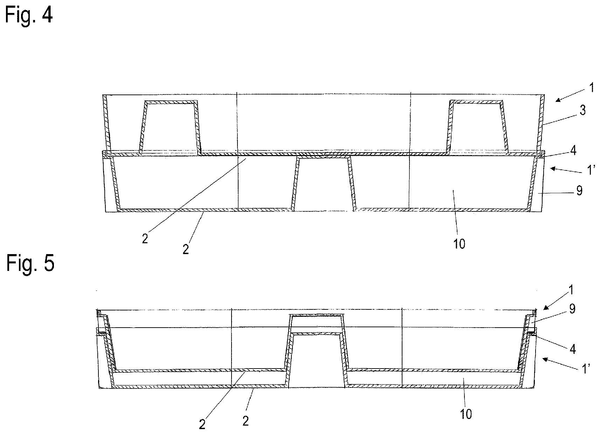

In Figur 2 ist in einer Draufsicht eine weitere Ausführungsform des erfindungsgemäßen Mehrweg-Behälters 1 dargestellt, bei dem nach innen ausgebildete Vorsprünge 4 ebenfalls durch Verformungen erzeugt wurden. Die Erhöhung 6 im Boden 2 ist hier in Form eines Buchstabens ausgebildet. Der Mehrweg-Behälter 1 weist im Gegensatz zu dem zuvor beschriebenen Ausführungsbeispiel keinen Griff 5 auf. Die gestrichelten Linien deuten den Rand 11 des Bodens 2 eines über dem dargestellten Mehrweg-Behälter 1 angeordneten gleich ausgebildeten Mehrweg-Behälters 1' an, wie es in Figur 4 und Figur 5 dargestellt ist.

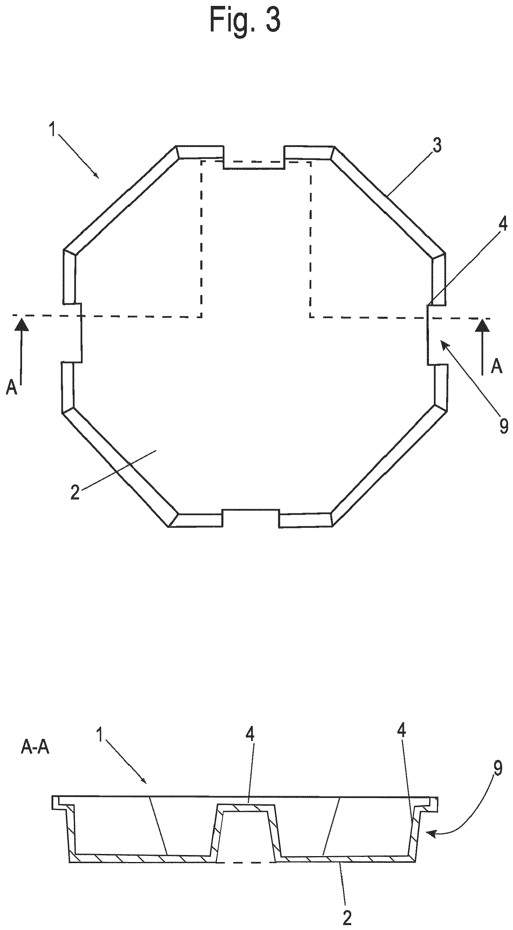

In Figur 3 ist im oberen Bereich eine schematische Draufsicht der in Figur 2 dargestellten Ausführungsform eines erfindungsgemäßen Mehrweg-Behälters 1 dargestellt. Sie zeigt, dass durch die nach innen ausgebildeten Vorsprünge 4 Aussparungen 9 gebildet werden. Im unteren Bereich ist der Schnitt A-A dargestellt, aus dem hervorgeht, dass die Vorsprünge 4 nach oben schmaler werden und zudem leicht zur Vertikalen nach außen geneigt sind.

In den Figuren 4 und 5 ist schematisch dargestellt, wie zwei der in Figur 2 und 3 dargestellten erfindungsgemäßen Mehrweg-Behälter 1, 1' übereinander angeordnet werden können. Die dargestellten Mehrweg-Behälter 1, 1' weisen eine zur Vertikalen nach außen geneigte Wandung 3 auf. Die vier Vorsprünge 4 sind ins Innere des Mehrweg-Behälters 1 ausgebildet, wodurch auf der Außenseite der Wandung 3 vier Aussparungen 9 gebildet werden. Vier Seiten der Wandung 3 weisen somit einen Vorsprung 4 auf und vier Seiten der Wandung 3 weisen keinen Vorsprung 4 auf. Die beiden in Figur 4 dargestellten Mehrweg-Behälter 1, 1' sind gestapelt, wobei der erste Mehrweg-Behälter 1 auf dem Vorsprung 4 des zweiten Mehrweg-Behälters 1' aufliegt, wodurch sich zwischen den Böden 2 ein Raum 10 bildet. In dieser Drehstellung kann jeder der Mehrweg-Behälter 1, 1' Lebensmittel, insbesondere eine Pizza aufnehmen, insbesondere zu Transportzwecken. Es können auf gleiche Art auch mehr als die zwei dargestellten Mehrweg-Behälter 1, 1' gestapelt werden. Ggf. kann ein leerer Mehrweg-Behälter als Deckel aufgesetzt werden. Alternativ kann auch ein separater, nicht als Behälter ausgebildeter Deckel verwendet werden.

Wenn der erste Mehrweg-Behälter 1 aus dem zweiten Mehrweg-Behälter 1' herausgehoben und in der Ebene des Bodens 2 um 45° gedreht wird, liegen die Vorsprünge 4 der beiden Mehrweg-Behälter 1, 1' vertikal in einer Linie übereinander. Beim Absenken ragt nun der Vorsprung 4 des zweiten Mehrweg-Behälters 1' zumindest abschnittsweise in die jeweilige Aussparung 9 hinein, wie in Figur 5 dargestellt ist, wodurch ein ineinander Versenken ermöglicht wird. Die Mehrweg-Behälter 1 können in dieser Drehstellung zueinander nunmehr platzsparend zur Lagerung gestapelt werden.

In einen erfindungsgemäßen Mehrweg-Behälter 1 kann zudem ein Einlegeboden 7 eingelegt werden, der zwischen dem Boden 2 und den Lebensmitteln vorgesehen ist. Dieser Einlegeboden 7 ist herausnehmbar und kann beispielsweise aus Papier oder Pappe bestehen. Die Form des Einlegebodens 7 kann an die Form des Bodens 2 angepasst sein.

Zum einfachen Herausheben der Ware umfasst der Einlegeboden 7 bevorzugt mindestens zwei seitliche und gegenüber liegende Grifflaschen 12, die abgewinkelt werden und so seitlich zwischen der Ware, z.B. der Pizza, und der Wandung 3 des Mehrweg-Behälters 1 hochragen. Dabei können die Grifflaschen 12 so lang ausgebildet sein, dass sie über den oberen Rand der Wandung 3 des Mehrweg-Behälters 1 hinausragen. Sie werden in dem Fall beim Aufsetzen eines weiteren Mehrweg-Behälters 1 nach innen, ggf. über die Ware gebogen. Durch die Grifflaschen 12 kann der Einlegeboden 7 einfach gegriffen werden und auf diese Weise die Ware leicht aus dem Mehrweg-Behälter 1 gehoben werden.

Zudem kann der Einlegeboden 7 einen vom Boden hochragenden Begrenzungsrand 14 umfassen, damit die Ware beim Herausheben gegen Herunterfallen gesichert ist. Der Begrenzungsrand 14 kann durchgängig sein, wobei an den Ecken des Mehrweg-Behälters 1 eine entsprechende Faltung vorzunehmen ist. Der Begrenzungsrand 14 kann jedoch auch aus mehreren, an ihren Seiten nicht miteinander verbundenen Abschnitten gebildet sein. Zur einfachen Handhabung können die Linien, entlang derer der Begrenzungsrand 14 hochgeknickt wird, durch eine Perforation 13 vorgegeben sein.

Ein solcher Einlegeboden 7 kann z.B. aus dünner Pappe zur einmaligen Benutzung vorgesehen sein. Auch in dem Fall wird Material eingespart, da die Materialmenge des Einlegebodens 7 deutlich kleiner ist, als wenn insgesamt ein Einweg-Behälter aus Pappe eingesetzt wird.

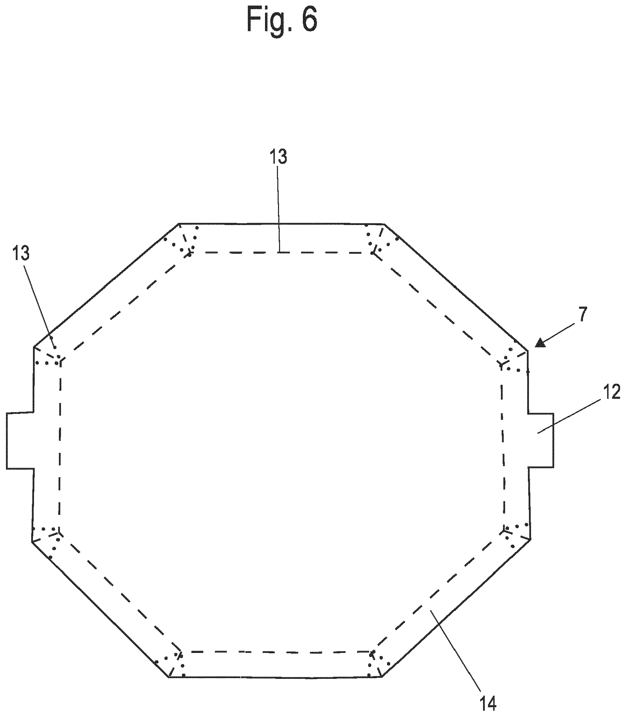

In Figur 6 ist ein beispielhafter Einlegeboden 7 mit aufrichtbarem Begrenzungsrand 14 dargestellt, wobei die gestrichelten und die gepunkteten Linien jeweils Perforationen 13 repräsentieren, die für entgegengesetzte Faltrichtungen vorgesehen sind. Nach dem Falten kann der achteckige Einlegeboden 7 mit aufgerichteter Begrenzung 14 in einem erfindungsgemäßen Mehrweg-Behälter 1 vorgesehen sein. Die beiden Grifflaschen 12 erleichtern das Herausheben der Lebensmittel.

In alternativen Ausgestaltungen kann die aufgerichtete Begrenzung 14 entfallen. Es können alternativ auch mehr als die beiden gezeigte Grifflaschen 12 vorhanden sein, beispielsweise vier Grifflaschen 12, von denen sich jeweils zwei gegenüberliegen. Eine Ausgestaltung mit vier Grifflaschen 12 kann insbesondere vorteilhaft sein, wenn kein oder kein durchgehend umlaufender Begrenzungsrand 14 vorgesehen ist, da die Grifflaschen 12 die Ware ebenfalls vor einem Herunterrutschen sichern.

### Bezugszeichenliste

- 1: Mehrweg-Behälter
- 2: Boden
- 3: Wandung
- 4: Vorsprung
- 5: Griff
- 6: Erhöhung
- 7: Einlegeboden
- 8: Grifflasche
- 9: Aussparung
- 10: Raum
- 11: Rand
- 12: Grifflasche
- 13: Perforation
- 14: Begrenzungsrand

## Patentansprüche

1. Mehrweg-Behälter (1) zum Lagern und Transportieren von Lebensmitteln, der einen Boden (2) zum Stützen der Lebensmittel, vorzugsweise Pizzen (9), und eine periphere Wandung (3), die vom Boden (2) wegragt, aufweist, **dadurch gekennzeichnet, dass** an der Wandung (3) mindestens zwei Vorsprünge (4), vorzugsweise in Form von Verformungen, ausgebildet sind.

2. Mehrweg-Behälter nach Anspruch 1, **dadurch gekennzeichnet, dass** beim Stapeln mit einem zweiten, gleich ausgebildeten Mehrweg-Behälter (1') der Mehrweg-Behälter (1) auf den mindestens zwei Vorsprüngen (4) des zweiten Mehrweg-Behälters (1') aufliegt, wenn die Mehrweg-Behälter (1, 1') in einer ersten Drehausrichtung zueinander stehen.

3. Mehrweg-Behälter nach Anspruch 1, **dadurch gekennzeichnet, dass** beim Stapeln mit einem zweiten, gleich ausgebildeten Mehrweg-Behälter (1') die mindestens zwei Vorsprünge (4) des Mehrweg-Behälters (1) auf dem zweiten Mehrweg-Behälter (1') aufliegen, wenn die Mehrweg-Behälter (1, 1') in einer ersten Drehausrichtung zueinander stehen.

4. Mehrweg-Behälter nach Anspruch 2 oder 3, **dadurch gekennzeichnet, dass** beim Stapeln der beiden gleich ausgebildeten Mehrweg-Behälter (1, 1') in einer in einer zweiten, von der ersten abweichenden Drehausrichtung die Mehrweg-Behälter (1, 1') sich zumindest teilweise ineinander versenken.

5. Mehrweg-Behälter nach einem der Ansprüche 1 bis 4, **dadurch gekennzeichnet, dass** an der Wandung (3) mindestens ein Griff (5), vorzugsweise in Form eines umlaufenden Vorsprungs, vorgesehen ist.

6. Mehrweg-Behälter nach einem der Ansprüche 1 bis 5, **dadurch gekennzeichnet, dass** am Boden (2) mindestens eine Erhöhung (6), vorzugsweise in Form von Verformungen, vorgesehen ist.

7. Mehrweg-Behälter nach einem der Ansprüche 1 bis 6, **dadurch gekennzeichnet, dass** der Mehrweg-Behälter (1) aus lebensmittelkonformem Kunststoff, vorzugsweise PP oder PE, besteht.

8. Mehrweg-Behälter nach einem der Ansprüche 1 bis 7, **dadurch gekennzeichnet, dass** er beim Stapeln auf einen gleich ausgebildeten Mehrweg-Behälter (1) zumindest abschnittsweise von dessen Wandung (3) umgeben ist.

9. Mehrweg-Anordnung aus einem Mehrweg-Behälter nach einem der Ansprüche 1 bis 8 und einem Einlegeboden (7), vorzugsweise aus Pappe, **dadurch gekennzeichnet, dass** der Einlegeboden (7) zwischen dem Boden (2) und den Lebensmitteln vorgesehen ist.

10. Mehrweg-Anordnung nach Anspruch 9, **dadurch gekennzeichnet, dass** der Einlageboden (7) einen seitlichen Begrenzungsrand (14) aufweist der vom Boden (2) des Mehrweg-Behälters (1) hochsteht.

11. Mehrweg-Anordnung nach Anspruch 9 oder 10, **dadurch gekennzeichnet, dass** der Einlageboden (7) seitliche Grifflaschen (12) aufweist, die vom Boden (2) oder von dem Begrenzungsrand (14) des Mehrweg-Behälters (1) hochstehen.
